# EUROPEAN PATENT SPECIFICATION

(11) **EP 0 958 664 B1**
(45) Date of publication and mention of the grant of the patent: **26.06.2002**
(21) Application number: 98901385.9
(22) Date of filing: 27.01.1998
(51) Int. Cl.: H04B 1/66

(54) **AUDIO COMPRESSION**
AUDIOKOMPRESSION
COMPRESSION AUDIO

(30) Priority: 27.01.1997 GB 9701616
(43) Date of publication of application: 24.11.1999
(73) Proprietor: BRITISH BROADCASTING CORPORATION, London W1A 1AA (GB)
(72) Inventor: WELLS, Nicholas, Dominic, East Sussex BN2 3AB (GB); MASON, Andrew, James, Surrey RH2 8DP (GB); FLETCHER, John, Andrew, Surrey RH2 7LU (GB); MCPARLAND, Andrew, Kevin, Surrey KT18 7JA (GB)
(74) Representative: Kazi, Ilya
(86) International application number: GB9800226
(87) International publication number: WO9833284

(56) References cited:
- EP-A- 0 423 050
- EP-A- 0 640 909
- US-A- 5 451 954
- US-A- 5 570 363
- "ERROR CORRECTION IN A HIDDEN CHANNEL TRANSMISSION SYSTEM" RESEARCH DISCLOSURE, no. 375, July 1995, page 498/499 XP000524820

## Description

This invention relates to compressed, that is to say data-reduced or bit-rate reduced, digital audio signals.

The invention is applicable to a wide range of digital audio compression techniques; an important example is the so-called "MPEG Audio" coding, defined in ISO/IEC standards IS 11172-3 and IS 13818-3.

In digital broadcasting, certain operations can be performed only on decoded audio signals. There is accordingly a requirement for compression decoding and re-encoding in the studio environment. It is of course desirable that these cascaded decoding and re-encoding processes should involve minimal reduction in quality. Studio operations such as mixing may be conducted on a digital PCM signal, although sometimes there will be a requirement for conversion of the PCM signal to analogue form. In the discussions that follow, attention will be focused on the use of a decoded audio signal in PCM format although it should be remembered that the invention also encompasses the use of decoded analogue signals in analogue form. It will further be appreciated that whilst the digital broadcasting studio environment conveniently exemplifies the present invention, the invention is applicable to other uses of compressed audio signals.

It is an object of the present invention, in one aspect, to provide improved digital audio signal processing which enables re-encoding of a compression decoded audio signal with minimal reduction in quality.

Accordingly, the present invention consists in a method of audio signal processing, comprising the steps of receiving a compression encoded audio signal; compression decoding the encoded audio signal; deriving an auxiliary data signal; communicating the auxiliary data signal with the decoded audio signal and re-encoding the decoded audio signal utilising information from the auxiliary data signal.

Preferably, the auxiliary data signal comprises essentially the encoded audio signal.

In one form of the invention, the auxiliary data signal is combined with the decoded audio signal for communication along the same signal path as the decoded audio signal.

The invention will now be described by way of example with reference to the accompanying drawings in which:-
Fig. 1 is a block diagram of a digital broadcasting studio installation utilising an embodiment of the present invention;
Fig. 2 is a block diagram of similar form illustrating a second embodiment of the present invention; and
Fig. 3 is a more detailed block diagram of the operation of the audio decoder (D1) and insertion unit (X) of Fig. 1 when a parity based system is employed for carrying the auxiliary data.

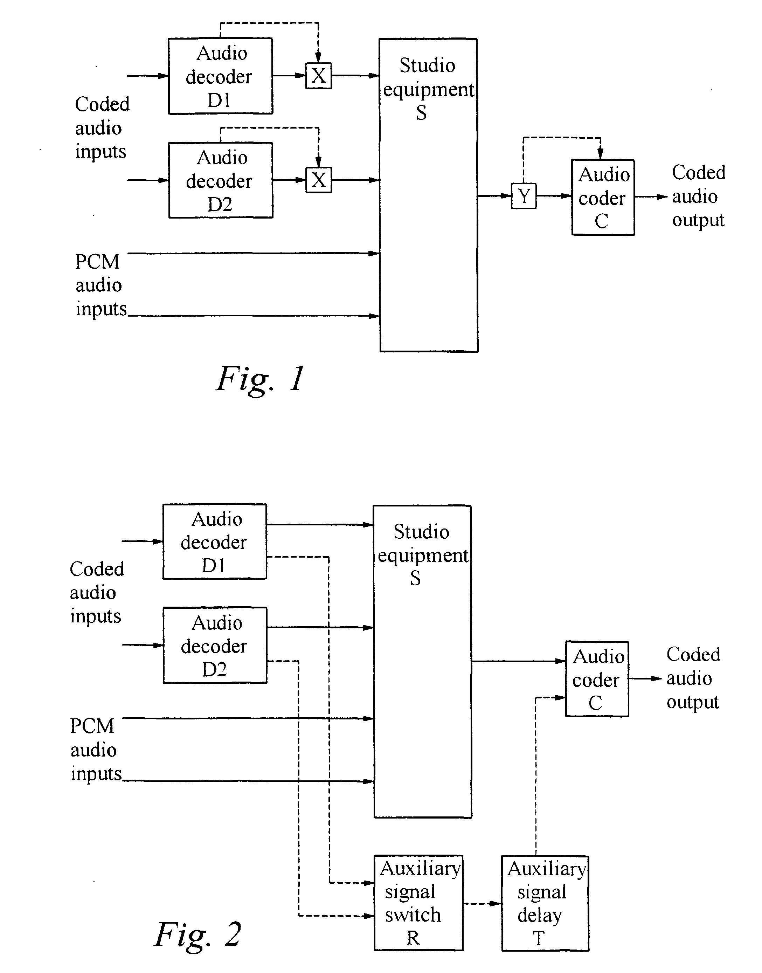

Referring to Fig. 1, a coded audio bit-stream enters the decoder (D1) at the top left and the decoder produces a linear PCM audio signal, typically in the form of an ITU-R Rec. 647 ("AES/EBU") bitstream, although other forms of PCM signal may be used. The PCM signal is connected to the studio equipment (S) which may provide such facilities as fading, mixing or switching. This connection is made via an insertion unit (X) which combines the auxiliary data signal with the PCM audio signal. Other audio sources are connected to the studio equipment; these are in the form of PCM signals, but some or all of them may previously have been coded, and those decoded locally may be accompanied by auxiliary data signals (e.g. the PCM signal from Decoder D2). The output of the studio equipment is applied to the input of the coder (C) via a signal splitter unit (Y) which separates the auxiliary data from the PCM signal. The output of the coder is a coded (i.e. digitally compressed) audio signal. In Fig. 1, the PCM signal path is represented by the solid line connecting the decoder and coder via the studio equipment. If just a PCM signal arrives at the coder (i.e. the auxiliary data signal is not present) the latter has to perform an independent re-coding process. This introduces impairments in the form of coding artifacts into the signal (in the case of a PCM signal which has previously been coded, but without the auxiliary signal, these artifacts are additional to those present as the result of the earlier coding).

In the example of an MPEG audio signal, the most important information to carry with the signal are the positions of the coded audio frame boundaries. These frames are 24ms long when the sampling frequency is 48 kHz.

The build up of impairments can be completely eliminated by avoiding decoding and re-coding wherever possible. For example, if enough of the original coded audio signal is conveyed to the coder, as the auxiliary data signal, the coded audio signal can be reconstituted and substituted for the decoded and re-coded signal. This would require that the studio equipment pass the PCM signal transparently, and that the coded bitstreams to be switched or mixed are frame aligned, or can be brought into frame alignment. Frame aligning can give rise to problems with audio/visual synchronisation ("lip sync") in applications such as television where the video is associated with the audio.

Alternatively, if the auxiliary data signal indicates to the coder the positions in the PCM bitstream of the frame boundaries of the original coded signal, it is possible to minimise any impairment introduced on re-coding if the original groups of audio samples which formed blocks of coded data (e.g. sub-band filter blocks or blocks of samples with the same scale factor) are kept together to form equivalent blocks in the re-coded signal, This does not require frame alignment of coded bitstreams within the studio area, but it does require alignment of the appropriate data blocks within the bitstreams. Such alignment can be effected by the introduction of relatively short delays, which do not significantly affect audio/video synchronisation. Further reductions in the impairment on re-coding may be made if information on the quantisation of the audio in the coded bitstream is conveyed to the coder (C).

A further possibility is to move frame boundaries in the incoming coded bitstreams, whilst preserving the original blocks of coded data, to bring the frames closer to alignment. Relatively short delays can then be used to effect frame alignment by "fine tuning" the timing of the signals. Frame aligning the coded bitstreams in this way, at a point where the entire incoming coded audio signal is available will minimize further impairment of the audio, and re-coding will take place with the repositioned frame boundaries.

If the frame boundaries are repositioned in such a way as to preserve the original block of samples with the same scale factor, only a partial decoding operation is needed. This technique is particularly suited to the editing of bit-rate reduced digital signals because full decoding and re-encoding can be eliminated.

In the case where the studio is receiving MPEG audio coded signals in the form of packetised elementary streams (PES), buffer stores in the decoders are used to ensure that the audio signals are correctly timed to a local clock and (if appropriate) to associated video signals, using a programme clock reference (PCR) and presentation time stamps (PTS) within signals. The relatively small adjustments to signal timing needed to align blocks within coded bitstreams entering the studio with the blocks formed by the re-encoding process in the coder (C) may be made either by making some adjustment to the timing in the decoders (D1, D2 etc.) or by introducing delays into the PCM signal paths.

In the arrangement of Fig. 1, the auxiliary data takes the same path as the PCM signal through the studio equipment, and is combined with the PCM audio in such a way that it has the minimal effect upon the audio. It is routed with the audio, and if the path is not transparent (e.g. because of fading or mixing) the modification of the auxiliary signal is detected in the coder, and re-coding of the audio proceeds independently of the auxiliary signal. If the path is transparent, the unmodified auxiliary signal facilitates the substitution of the re-coded PCM signal by the original coded signal, or re-coding with the data blocks of the re-coded signal reproducing the blocks of the original signal as closely as possible, as described above. The dotted line of Fig. 1. represents the path taken by the auxiliary data.

Any modification of the signal and associated auxiliary data is detected by appropriate examination of the auxiliary data. For example, the auxiliary data may be accompanied by error-detecting cyclic redundancy check bits associated with the auxiliary data for each coded audio frame.

Audio signals which have not previously been coded will not be accompanied by any auxiliary data and will be impaired by the coding artifacts introduced by first-time coding when coded by the coder (C). Signals which have previously been coded but for which no auxiliary data is available will be impaired by additional coding artifacts when re-coded by the coder (C).

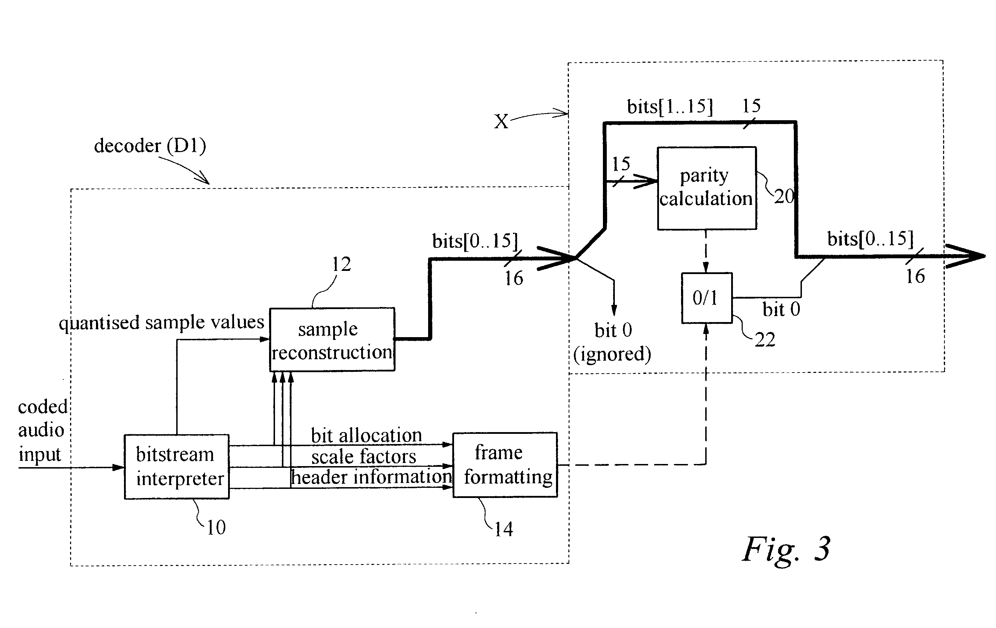

Although, as explained, the auxiliary data signal can be communicated with the decoded audio signal in any of a number of ways, for ease of understanding, a preferred manner of implementing this will now be described with reference to Fig. 3.

Referring to Fig. 3, the decoder D1 comprises a bitstream interpreter 10 which is arranged to receive a compression encoded audio signal and to interpret it to obtain sample values and coding information, for example, in the case of MPEG-2 audio, bit allocation, scale factors and header information. From this information, a decoded sample is constructed by sample reconstruction element 12, here shown producing a 16 bit sample, but other sample sizes may be employed (either less, e.g. 8 bits, or more; typically for studio applications where high quality is required, 20 or 24 bits may be used). The information concerning the coding is passed to a frame formatting element 14 which combines the information into a data stream of a defined format, to produce the auxiliary data signal. Not shown in the Figure, additional source(s) of data may be present, and this additional data may be formatted and carried together with the coding information. It is to be noted that, apart from the formatting of the auxiliary data, the functions of the decoder may be entirely conventional. The precise arrangement of the auxiliary data is not critical; any convenient format that allows the required information to be extracted may be chosen.

The decoded data stream is passed as 16 bit data to the insertion unit (X) which discards the least significant bit, and passes the remaining bits (upper 15 in this case) to a parity calculator 20. The results of the parity calculation are combined with a single data bit to be coded from the auxiliary data stream in parity encoder 22 to recreate a 16 bit wide data word in which the parity of the word encodes a data bit of the auxiliary data signal, odd for one, even for zero (or vice versa). The resulting (in this case 16 bit) data word may be framed and transmitted serially according to any desired system, as if it were a "genuine" audio sample. Thus, transmitting the data signal automatically achieves communication of the auxiliary data signal with the decoded audio signal.

The use of parity-based encoding is not essential; for example, the data to be sent could be simply sent as the least significant bit of the audio data.

It will be appreciated that the signal splitter unit Y requires complementary apparatus. In the example of parity based encoding, the sample data can simply be passed unchanged by the splitter Y (or the least significant bit can be altered - this makes little difference as the least significant bit no longer carries audio information) and the auxiliary data provided as the output of a parity checking device operating on the entire data word. The auxiliary data can then be supplied to a coder for use in re-coding the decoded signal, for example by using similar quantisation levels.

The auxiliary data signal need not be communicated directly with the decoded audio data, as in the above example, but may be conveyed over a separate path, as will now be described with reference to Fig. 2.

Referring to Fig. 2, the PCM audio signal takes the same path through the studio equipment from the decoder (D1) to the coder (C) via the studio equipment (S). However, in this arrangement, the auxiliary data signal is not combined with the PCM audio but is routed separately. This arrangement has the advantage that the auxiliary data is not combined with the PCM audio, and there is no risk of audible changes to the signal as a result. This might be important, for example, if the studio equipment has only a limited resolution in terms of the audio sample word-length. Furthermore, the auxiliary data is not modified by fading or mixing. There are disadvantages in that the auxiliary signal needs to be delayed to keep it time-aligned with the PCM audio passing through the studio equipment (5), and switching is necessary in the auxiliary data path so that the correct auxiliary data is always presented to the coder (C) with the associated PCM signal. As in the arrangement of Fig. 1, the coder needs to perform re-coding independently of the auxiliary signal at times when the path through the studio equipment (S) is not transparent. One way of ensuring that this happens is for the switch (R) which routes the auxiliary signals to the coder to suppress all such signals when independent re-coding is necessary. Another way would be to add a subsidiary auxiliary data signal to the audio passing through the studio equipment (S) which would enable detection of non-transparent processing. This might be, for example, a known pseudorandom binary sequence (prbs) or some form of cyclic redundancy check data on some or all of the audio data.

In Fig. 2, the delay (T) required in the auxiliary data path should be constant, and may be determined by means of suitable tests. However, incoming MPEG audio coded bitstreams in PES form contain PTS, as mentioned previously, and PCM audio signals can carry time information (e.g. the time codes in the ITU-R Rec. 647 signal) which may comprise, or be derived from, the incoming PTS. If the auxiliary signal contains the same information, or the PTS itself, the initial setting of the delay (T) and the subsequent verification of the amount of delay may be performed automatically.

Examples of signals that could comprise the auxiliary data are:
1. The coded audio signal at the input to the decoder (D1, D2, etc.). This contains not only audio-related data and the PTS but also certain auxiliary information such as programme-associated data (PAD), which may need to be copied into the coded signal at the output from the studio area, and error protection. Depending upon the circumstances, such a signal would enable the coder (C) to substitute the original coded signal for the re-coded PCM signal, or to re-code the PCM signal with blocks of audio data resembling closely the blocks within the original coded signal, as described above. Conveying the coded audio signal to the coder provides the widest range of options for re-coding with minimal additional impairment of the audio.
2. The coded audio samples at the input to the decoder minus the quantised audio samples (which can be re-created identically from the PCM audio signal). This is a signal in which the positions of the frame boundaries of the original coded signal are indicated relative to the linear audio samples in the PCM signal, and from which the positions of the blocks of data within the frames may be deduced, together with information on the allocation of bits to the various components of the coded signal (sometimes known as "bit-allocation data"), scale factors, block lengths (in coding schemes where, this is relevant), the PTS, and any other data relevant to the coding system in use.
3. A signal similar to that described in "2" above, but containing a subset of the information described (e.g. just the positions of the frame boundaries).

Ways in which the auxiliary data signal might be transported with the PCM audio are:
1. In the auxiliary sample bits of the ITU-R Rec. 647 bitstream. At the studio standard sampling frequency of 48 kHz, a total bit rate of 384 kbit/s is available in the auxiliary sample bits of both "X" and "Y" subframes. This method is ideal for conveying the auxiliary data between different items of equipment but there is some uncertainty concerning the way in which studio equipment might treat these auxiliary sample bits. For example, the studio equipment may not route these bits through to the output with the PCM audio, or it may not delay these bits by the same amount as the PCM audio. In either case, some modification of the studio equipment, or of the environment around it, may be necessary.
2. In the least significant bits (l.s.b.) of the PCM audio sample words of the ITU-R Rec. 647 bitstream. The bits can be inserted into active audio or may be additional bits. Depending upon the resolution of the studio equipment these may the same as the auxiliary sample bits (these are the l.s.b if the Rec. 647 signal is configured to carry 24-bit audio sample words) or the least significant bits within the part of the subframe reserved for 20-bit audio sample words (these are the same bits that carry the 20 most significant bits of 24-bit sample words). As shown in the example illustrated with reference to Fig. 3, the data can be carried as the least significant bit of 16 bit audio. Carrying the auxiliary data in the l.s.b. of the audio sample words overcomes the problems of routing within the studio equipment and care will be taken to ensure that the auxiliary data signal is inaudible. The studio equipment needs to be transparent to audio sample words of at least 20 bits. If necessary, the audibility of the auxiliary data signal could be reduced by scrambling (e.g. by the modulo-2 addition of a pseudorandom binary sequence, or the use of a self-synchronising scrambler). Alternatively, it could be removed altogether by truncating the audio sample words to the appropriate length (i.e. to exclude the auxiliary data).
3. In the user data bits of the ITU-R Rec. 647 bitstream. Taking the user data bits from both "X" and "Y" subframes provides a channel with a bit rate of only 96 kbit/s. In many applications this is unlikely to be sufficient to carry the complete coded audio signal. It would be sufficient to signal the positions of frame boundaries, and to carry some other information extracted from the coded audio. With this method there is uncertainty concerning the way in which studio equipment might treat the user data.
4. In the upper part of the audio spectrum, at frequencies higher than those of the audible components of the signal. For this purpose, the PCM audio signal would be low-pass filtered, and the coded auxiliary data signal added above the passband occupied by the audible signal. A particularly ingenious way of doing this, when the studio area is receiving MPEG audio coded signals, would be to use an MPEG analysis subband filterbank with the reciprocal synthesis filterbank at the insertion units (X) in Fig. 1. At 48 kHz sampling frequency, the audio passband extends almost up to 24 kHz. In MPEG audio coding this passband is divided into 32 equally-spaced subbands, each with a bandwidth of 750 Hz. The upper five subbands are not used, and the audio is thus effectively low-pass filtered to 20.25 Khz. The auxiliary data could be inserted into the upper subbands, and would be carried in the upper part of the spectrum of the PCM audio signal, to be extracted by another MPEG analysis filterbank at the splitter (Y) shown in Fig. 1. The PCM signal applied to the coder (C) would not need further filtering to remove the auxiliary data, as this would happen in the analysis filterbank in the coder itself.
5. The auxiliary signal might be a low-level known pseudo random binary sequence (prbs) added to the audio. The prbs would be synchronised in some way with the audio frame boundaries and may be modulated with additional data where possible. It is also possible to subtract the prbs from the data prior to final transmission or monitoring.

It has been explained that under certain circumstances it is appropriate to perform partial decoding and re-encoding. In the appended claims the terms decoding and re-encoding should be taken as including partial decoding and re-encoding, respectively.

## Claims

1. A method of audio signal processing, comprising the steps of receiving a compression encoded audio signal; compression decoding the encoded audio signal; deriving an auxiliary data signal; communicating the auxiliary data signal with the decoded audio signal and re-encoding the decoded audio signal utilising information from the auxiliary data signal.

2. A method according to Claim 1, wherein the auxiliary data signal comprises essentially the encoded audio signal.

3. A method according to Claim 2, wherein the auxiliary data signal comprises audio-related data from the encoded audio signal.

4. A method according to Claim 3, wherein the auxiliary data signal comprises time information from the encoded audio signal.

5. A method according to Claim 4, wherein the auxiliary data signal further comprises ancillary information, such as program-associated data, from the encoded audio signal.

6. A method according to any proceeding claim wherein the auxiliary data signal is indicative of the analysis in a quantisation employed for the compression encoded audio signal and wherein said re-encoding produces a re-encoded audio signal employing said analysis and quantisation.

7. A method according to Claim 6, wherein the analysis comprises application of sub-band filter bank.

8. A method according to Claim 7, wherein the auxiliary data signal is. indicative of the frequency analysis into sub-bands and the method of quantisation within each sub-band employed for the encoded audio signal frequency.

9. A method according to any one of the preceding claims, wherein the encoded audio signal is an MPEG audio coded signal.

10. A method according to Claim 9, wherein the auxiliary data signal contains information relating to one or more of: the position of audio frame boundaries in the audio signal; frequency sub-bands; scale factors for the sub-bands within each audio frame; bit allocation data for the audio frame.

11. A method according to any one of the preceding claims, wherein the auxiliary data signal is combined with the decoded audio signal for communication along the same signal path as the decoded audio signal.

12. A method according to Claim 11, wherein the auxiliary data signal is formatted to enable an integrity check prior to use of the auxiliary data signal in a re-encoding process, to ensure transparent communication of the auxiliary data signal along the decoded audio signal path.

13. A method according to Claim 11, wherein the auxiliary data signal is carried in the least significant bits of a digital decoded audio signal.

14. A method according to Claim 11, wherein the auxiliary data signal is carried as user data bits in a recognized digital interface format such as ITU-R Rec. 647.

15. A method according to Claim 11, wherein the auxiliary data signal is carried in the upper part of the audio spectrum.

16. A method according to Claim 15, wherein the auxiliary data signal is carried in higher frequencies associated with sub-bands unused in the compression encoding.

17. A method according to Claim 16, in which MPEG audio coding is employed, wherein a filter arrangement analogous to the MPEG analysis sub-band filter arrangement and its reciprocal, is employed for insertion of the auxiliary data signal into the decoded audio signal.

18. A method according to any one of Claims 1 to 10, wherein the auxiliary data signal is carried in a separate path to the decoded audio signal.

19. A method according to Claim 18, wherein the auxiliary data signal path is disabled in the event of processing in the decoded audio signal preventing sensible use of information from the auxiliary data signal in re-encoding.

20. A method according to Claim 19, wherein a tell-tale is added to the decoded audio signal indicative of such processing.

21. A method according to any preceding claim comprising adding a subsidiary auxiliary data signal to enable detection of non-transparent processing.

22. A method according to any preceding claim for use in an application where video is associated with the audio, wherein the auxiliary data signal is used in audio/visual synchronisation.

23. Apparatus arranged to perform a method according to any preceding claim.

## Patentansprüche

1. Verfahren zum Verarbeiten eines Audiosignals, umfassend die Schritte eines Empfangs eines komprimierungskodierten Audiosignals; einer Komprimierungsdekodierung des kodierten Audiosignals; einer Ableitung eines zusätzlichen Datensignals; einer Übermittlung des zusätzlichen Datensignals mit dem dekodierten Audiosignal und einer erneuten Kodierung des dekodierten Audiosignals unter Verwendung von Information von dem zusätzlichen Datensignal.

2. Verfahren nach Anspruch 1, bei dem das zusätzliche Datensignal im wesentlichen das kodierte Audiosignal umfasst.

3. Verfahren nach Anspruch 2, bei dem das zusätzliche Datensignal Audio-bezogene Daten von dem kodierten Audiosignal umfasst.

4. Verfahren nach Anspruch 3, bei dem das zusätzliche Datensignal Zeitinformationen von dem kodierten Audiosignal umfasst.

5. Verfahren nach Anspruch 4, bei dem das zusätzliche Datensignal Zusatzinformation, beispielsweise programmbezogene Daten, von dem kodierten Audiosignal umfasst.

6. Verfahren nach einem der vorhergehenden Ansprüche, bei dem das zusätzliche Datensignal hinweisend auf die Auswertung in einer Quantisierung ist, die für das komprimierungskodierte Audiosignal verwendet wird, und bei dem die erneute Kodierung ein erneut kodiertes Audiosignal erzeugt, wobei die Auswertung und Quantisierung eingesetzt wird.

7. Verfahren nach Anspruch 6, bei dem die Auswertung die Anwendung einer Teilband-Filterbank umfasst.

8. Verfahren nach Anspruch 7, bei dem das zusätzliche Datensignal hinweisend auf die Frequenzauswertung in Teilbänder ist und das Verfahren zur Quantisierung innerhalb von jedem Unterband für die Frequenz des kodierten Audiosignals eingesetzt wird.

9. Verfahren nach einem der vorhergehenden Ansprüche, bei dem das kodierte Audiosignal ein MPEG-kodiertes Audiosignal ist.

10. Verfahren nach Anspruch 9, bei dem das zusätzliche Datensignal Informationen enthält, die sich zumindest auf eine der folgenden Informationen bezieht: die Position von Audio-Frame-Grenzen in dem Audiosignal; Frequenz-Teilbänder; die Skalierungsfaktoren für die Teilbänder innerhalb von jedem Audio-Frame; die Bitzuordnungsdaten für das Audio-Frame.

11. Verfahren nach einem der vorhergehenden Ansprüche, bei dem das zusätzliche Datensignal mit dem dekodierten Audiosignal zur Übermittlung entlang derselben Signalübertragungsstrecke wie das dekodierte Audiosignal verknüpft wird.

12. Verfahren nach Anspruch 11, bei dem das zusätzliche Datensignal formatiert wird, um eine Integritätsüberprüfung vor der Verwendung des zusätzlichen Datensignals in einem erneut kodierenden Prozess zu ermöglichen, um eine transparente Übermittlung des zusätzlichen Datensignals entlang der Übertragungsstrecke für das dekodierte Audiosignal zu gewährleisten.

13. Verfahren nach Anspruch 11, bei dem das zusätzliche Datensignal in den niedrigstwertigen Bits eines digitalen dekodierten Audiosignals übertragen wird.

14. Verfahren nach Anspruch 11, bei dem das zusätzliche Datensignal als Nutzer-Datenbits in einem anerkannten digitalen Schnittstellenformat, wie beispielsweise der ITU-R Empfehlung 647, übertragen wird.

15. Verfahren nach Anspruch 11, bei dem das zusätzliche Datensignal in dem oberen Teil des Audiospektrums übertragen wird.

16. Verfahren nach Anspruch 15, bei dem das zusätzliche Datensignal in höheren Frequenzen übertragen wird, die Teilbändern zugeordnet sind, die in der Komprimierungskodierung nicht verwendet werden.

17. Verfahren nach Anspruch 16, bei dem eine MPEG-Audiokodierung eingesetzt wird, wobei eine Filteranordnung analog zu der Teilband-Filteranordnung der MPEG-Auswertung und ihr Gegenstück zur Einfügung des zusätzlichen Datensignals in das dekodierte Audiosignal eingesetzt wird.

18. Verfahren nach einem der Ansprüche 1 bis 10, bei dem das zusätzliche Datensignal in einer separaten Übertragungsstrecke zu dem dekodierten Audiosignal übertragen wird.

19. Verfahren nach Anspruch 18, bei dem die zusätzliche Datensignalübertragungsstrecke für den Fall einer Verarbeitung in dem dekodierten Audiosignal gesperrt wird, was eine wahrnehmbare Verwendung von Informationen von dem zusätzlichen Datensignal bei der erneuten Kodierung verhindert.

20. Verfahren nach Anspruch 19, bei dem ein Anzeiger zu dem dekodierten Audiosignal hinzugefügt wird, der auf eine solche Verarbeitung hinweist.

21. Verfahren nach einem der vorhergehenden Ansprüche, umfassend ein Hinzufügen eines untergeordneten zusätzlichen Datensignals, um eine Detektion einer nicht transparenten Verarbeitung zu ermöglichen.

22. Verfahren nach einem der vorhergehenden Ansprüche zur Verwendung in einer Anwendung, bei der ein Videosignal dem Audiosignal zugeordnet ist, wobei das zusätzliche Datensignal bei einer Audio-/visuellen Synchronisation verwendet wird.

23. Vorrichtung, die ausgelegt ist, um ein Verfahren nach einem der vorhergehenden Ansprüche auszuführen.

## Revendications

1. Un procédé de traitement de signal audio, comprenant les étapes suivantes : on reçoit un signal audio codé avec compression; on effectue un décodage de compression du signal audio codé; on élabore un signal de données auxiliaire; on transmet le signal de données auxiliaire avec le signal audio décodé et on recode le signal audio décodé en utilisant une information provenant du signal de données auxiliaire.

2. Un procédé selon la revendication 1, dans lequel le signal de données auxiliaire comprend essentiellement le signal audio codé.

3. Un procédé selon la revendication 2, dans lequel le signal de données auxiliaire comprend des données liées à l'information audio provenant du signal audio codé.

4. Un procédé selon la revendication 3, dans lequel le signal de données auxiliaire comprend une information de temps provenant du signal audio codé.

5. Un procédé selon la revendication 4, dans lequel le signal de données auxiliaire comprend en outre une information annexe, telle que des données associées à un programme, provenant du signal audio codé.

6. Un procédé selon l'une quelconque des revendication précédentes, dans lequel le signal de données auxiliaire indique l'analyse dans une quantification employée pour le signal audio codé avec compression, et dans lequel le recodage produit un signal audio recodé employant cette analyse et cette quantification.

7. Un procédé selon la revendication 6, dans lequel l'analyse comprend l'application d'une batterie de filtres de sous-bandes.

8. Un procédé selon la revendication 7, dans lequel le signal de données auxiliaire indique l'analyse de fréquence en sous-bandes et le procédé de quantification à l'intérieur de chaque sous-bande qui est employé pour la fréquence du signal audio codé.

9. Un procédé selon l'une quelconque des revendications précédentes, dans lequel le signal audio codé est un signal audio codé du type MPEG.

10. Un procédé selon la revendication 9, dans lequel le signal de données auxiliaire contient une information concernant une ou plusieurs des caractéristiques suivantes : la position de frontières de trames audio dans le signal audio; des sous-bandes de fréquence; des facteurs d'échelle pour les sous-bandes dans chaque trame audio; des données d'allocation de bits pour la trame audio.

11. Un procédé selon l'une quelconque des revendications précédentes, dans lequel le signal de données auxiliaire est combiné avec le signal audio décodé pour être communiqué par la même voie de signal que le signal audio décodé.

12. Un procédé selon la revendication 11, dans lequel le signal de données auxiliaire est formaté pour permettre un contrôle d'intégrité avant l'utilisation du signal de données auxiliaire dans un processus de recodage, pour assurer une communication transparente du signal de données auxiliaire sur la voie de signal audio décodé.

13. Un procédé selon la revendication 11, dans lequel le signal de données auxiliaire est transporté dans les bits les moins significatifs d'un signal audio décodé numérique.

14. Un procédé selon la revendication 11, dans lequel le signal de données auxiliaire est transporté sous la forme de bits de données d'utilisateur dans un format d'interface numérique admis, tel que le format ITU-R Rec.647.

15. Un procédé selon la revendication 11, dans lequel le signal de données auxiliaire est transporté dans la partie supérieure du spectre audio.

16. Un procédé selon la revendication 15, dans lequel le signal de données auxiliaire est transporté dans des fréquences supérieures associées à des sous-bandes inutilisées dans le codage avec compression.

17. Un procédé selon la revendication 16, dans lequel le codage audio MPEG est employé, et dans lequel une structure de filtres analogue à la structure de filtres de sous-bandes d'analyse MPEG et sa structure réciproque, est employée pour l'insertion du signal de données auxiliaire dans le signal audio décodé.

18. Un procédé selon l'une quelconque des revendications 1 à 10, dans lequel le signal de données auxiliaire est transporté dans une voie séparée de celle du signal audio décodé.

19. Un procédé selon la revendication 18, dans lequel la voie de signal de données auxiliaire est désactivée dans le cas d'un traitement, dans le signal audio décodé, empêchant une utilisation rationnelle d'information provenant du signal de données auxiliaire dans le recodage.

20. Un procédé selon la revendication 19, dans lequel un mouchard est ajouté dans le signal audio décodé pour indiquer un tel traitement.

21. Un procédé selon l'une quelconque des revendications précédentes, comprenant l'ajout d'un signal de données auxiliaire secondaire, pour permettre la détection d'un traitement non transparent.

22. Un procédé selon l'une quelconque des revendications précédentes, pour l'utilisation dans une application dans laquelle de l'information vidéo est associée à l'information audio, dans lequel le signal de données auxiliaire est utilisé dans la synchronisation audio/visuelle.

23. Appareil conçu pour mettre en oeuvre un procédé conforme à l'une quelconque des revendications précédentes.
